# EUROPEAN PATENT SPECIFICATION

(11) **EP 0 627 299 B1**
(45) Date of publication and mention of the grant of the patent: **29.07.1998**
(21) Application number: 94108308.1
(22) Date of filing: 30.05.1994
(51) Int. Cl.: B29C 59/04, B29C 53/06

(54) **Process for thermoforming shapes on foamed thermoplastic material and cross-linked foamed thermoplastic material in sheets or bands**
Verfahren zur Warmformung von geschäumten thermoplastischen Materialien und von vernetzten und geschäumten thermoplastischen Materialien in Folien oder Bändern
Procédé pour thermoformer de matière thermoplastique expansé et de matière thermoplastique expansé et réticulé en feuilles ou bandes

(30) Priority: 03.06.1993 IT TV930061
(43) Date of publication of application: 07.12.1994
(73) Proprietor: FOMATEX S.r.l., I-20090 Assago (Milano) (IT)
(72) Inventor: Cirasa, Paolo, I-22058 Osnago, (Como) (IT)
(74) Representative: Modiano, Guido, Dr.-Ing.

(56) References cited:
- DE-A- 3 924 316
- GB-A- 1 543 977
- NL-A- 6 800 843
- US-A- 3 655 312
- US-A- 3 953 639
- US-A- 4 810 558

## Description

The present invention relates to a process for thermoforming shapes on foamed thermoplastic material and cross-linked foamed thermoplastic material in sheets or bands, as well as to a calender for use in such a process.

It is known to currently manufacture mats, made of foamed material, which are used in the camping sector or individual gymnastics; in order to allow their easy storage, they have the peculiarity of being foldable.

Accordingly, it is known to manufacture these mats by performing a thermoforming process after the complete cooling of the foamed material.

This entails heating or again preheating the material and then passing it through a press to form folding lines. This known method therefore entails shaping the material, starting from a sheet-like shape, by performing a second pressing operation that requires the application of energy to heat the foamed material internally or locally, and the use of machines achieving the partial compression of the material.

This leads to an increase in manufacturing times and costs, thus increasing the overall cost of the product.

German patent no. 3924316 discloses a foldable mat made of foamed material, said mat having a first pair of perpendicular lines extending along the entire length thereof and a significant number of lines which are perpendicular to the longitudinal ones.

These perpendicular lines extend from the longitudinal mid axis of the mat toward both edges.

A simple folding line and a double folding line is obtained from the paired lines according to the individual instances.

In this solution it is thus possible to obtain a mat that is foldable but has the drawback of being bulky when folded, thus increasing storage costs.

Known from US-A-3,240,845 is a method for the production of container blanks formed of semi-rigid polyurethane foam sandwich material. The method includes a step wherein a band of sandwich material is fed through calenders according to the preamble of claim 5, which form grooves on the outer layers of both sides of the sandwich material. The grooves are arranged opposite each other and each have a depth of about one third of the thickness of the cured sandwich material. The scored sandwich material is heated to cure the polyurethane foam. The grooves serve as score lines for the blank so that upon folding of the blank, the grooves form a bread container corner integrally connected to the polyurethane container walls by a bridge of the polyurethane foam remaining between the opposing grooves.

However, the finished sandwich material known from US-A-3,240,845 can only be folded to a very limited degree (to an angle of 90 degrees for forming a corner) and thus cannot be folded or rolled in such a manner as to be compact for storage.

Also known from US-A-3,655,312 is a process and apparatus for manufacturing an embossed foamed resin surface covering. The method includes the steps of supplying a base felt web such as an asbestos felt web, from a roll, and then applying to the web with a reverse roll coater, a foamable polyvinyl chloride resin layer including a dispersed blowing agent. The coated web is passed through an oven and then through cooling rolls. The cooled web is then subjected to four rotogravure printing operations, before being wound into a roll. The printed web roll is then placed in a loading position and fed through a reverse roll coater, where a clear protective polyvinyl chloride layer is applied over the printing. Thereafter, the web is passed through an oven, where it is again heated to a temperature sufficient to decompose the blowing or foaming agent to develop the foam and fuse the resin materials. Upon leaving the oven, the web which is still hot is passed through a roll embosser including a roll provided with lands and valleys, and a smooth backing roll.

The method known from US-A-3,655,312 thus has the disadvantage of having a first heating step for forming the web, followed by a cooling step, whereafter the web is wound in a roll, followed by a second successive heating step for carrying out the embossing operation. The successive heating steps implying respectively increased energy costs. Furthermore, the successive heating, cooling and reheating steps also imply prolonged processing times.

An aim of the present invention is therefore to solve the described technical problems, eliminating the drawbacks of the known art and thus providing a process that allows to achieve, at modest costs, items such as mats for the camping sector or for individual gymnastics which have the desired geometrical configuration and at the same time occupy a very limited space for storage.

Within the scope of the above aim, an important object is to provide a process that allows to reduce and limit processing times, thus simultaneously reducing overall costs for obtaining the products.

This aim, these objects and others which will become apparent hereinafter are achieved by a continuous process for thermoforming shapes on foamed thermoplastic material and cross-linked foamed thermoplastic material in sheets or bands, as defined in the appended claims.

Further characteristics and advantages of the invention will become apparent from the following detailed description of two particular but not exclusive embodiments thereof, illustrated only by way of non-limitative example in the accompanying drawings, wherein:
figure 1 is a schematic view of a calender used for processing the sheet or band;
figure 2 is a sectional view of the shape of a cylinder, extended onto a plane;
figure 3 is a schematic view of the product that is obtained, such as for example a mat foldable in an accordion-like manner;
figure 4 is a sectional view of a different configuration for a cylinder, extended onto a plane;
figure 5 is a sectional view of the shape of the product that can be obtained, and thus of a mat having a different shape;
figure 6 shows the possibility of folding the product of the preceding figure by rolling it up.

With reference to the above figures, the process for thermoforming shapes on foamed thermoplastic material and cross-linked foamed thermoplastic material in the shape of sheets or bands, generally designated by the reference numeral 1, entails the continuous calendering of said sheets or bands, after the end of the foaming process and prior to the beginning of the cooling step, at a calender, generally designated by the reference numeral 2, which is constituted by a first cylinder 3 and by a second cylinder 4.

The sheet or band 1 thus affects the calender 2 while the foamed material is still warm; the first and second cylinders have protrusions or teeth 5 appropriately shaped and mutually spaced.

Figure 4 illustrates a first embodiment which entails, for the first cylinder 3, the use of teeth 5 at least equal in height or higher than the thickness of the sheet or band.

A preferred embodiment of the present invention provides conveniently the use of a calender constituted by two cylinders provided with teeth, such as those shown in figure 4 and arranged so that they mutually alternate.

Naturally, the arrangement of the teeth 5 may be the most appropriate according to the specific requirements and to the desired dimensions that can be obtained for the manufactured item, which is constituted by one or more mats 6 which can be obtained individually from the calendering of the sheet or band 1 or by cutting, along the same longitudinal axis along which the sheet or band 1 is processed.

For example, the teeth 5 can be arranged in pairs that are offset by 180^{o} in the first and second cylinders.

One or more mats 6 are thus obtained, the characteristic of which is that they are foldable in an accordion-like manner so as to limit the volume occupied for storage.

It is to be noted that by processing the sheet or band continuously, the process performed allows to reduce processing times, considerably decreasing production costs.

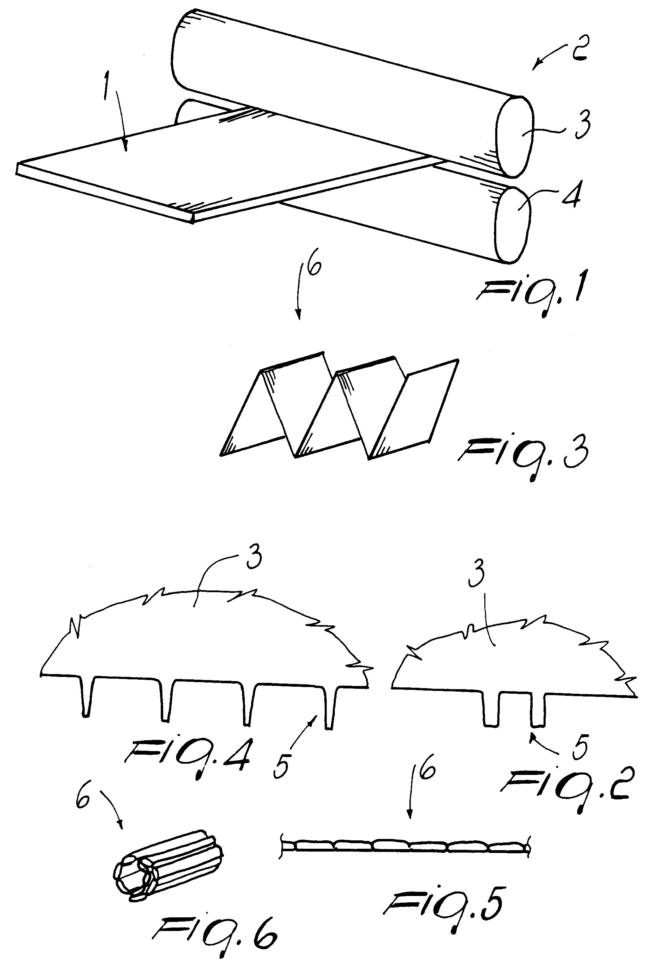

Figure 2 illustrates a further configuration of the cylinders, in which the teeth 5 are more widely spaced and are substantially as high as the thickness of the sheet or band.

A further embodiment of the present invention employs a calender constituted by the cylinder of figure 2 and by a second cylinder the surface whereof is instead smooth.

By appropriately varying the shape and center distance of the teeth 5 it is possible to obtain a material which, when cut in sheets, forms mats that can be easily rolled up like a blind.

In this case, too, continuous thermoforming of shapes on foamed and cross-linked foamed materials in bands or sheets, directly during the process for manufacturing said foamed materials, allows to considerably reduce production times and the costs for obtaining the items, such as for example mats usable in the camping sector or individual gymnastics.

Furthermore, the possibility of diversifying the geometry of the folding lines by varying the arrangement and shape of the teeth of the calender allows to obtain materials of reduced bulk with respect to the volume normally occupied.

Furthermore, the manufacture of materials having the required folding regions allows the cutting to size of the mat, for example, while keeping in stock a sheet or band conveniently folded.

It has thus been observed that the process has achieved the intended aim and objects, since it is possible to obtain a material having limited manufacturing times as well as modest costs.

This process furthermore allows to obtain a material that can be conveniently folded, containing and optimizing its storage bulk.

The present invention is naturally susceptible to numerous modifications and variations, all of which are within the scope of the invention as defined in the appended claims.

The number and the shape of the teeth of the calender may naturally also be the most pertinent according to the specific requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Continuous process for thermoforming shapes on foamed thermoplastic material and cross-linked foamed thermoplastic material in sheets or bands, comprising the steps of;
- producing a band of heated foamed thermoplastic material at a predetermined thickness;
- continuously calendering said band of heated foamed thermoplastic material by passing said band between a first calender cylinder and a second calender cylinder, at least one of which is provided with teeth having a height which is at least equal to the thickness of said band of heated foamed thermoplastic material being calendered;
- cooling the calendered band of foamed thermoplastic material, and;
- folding or rolling the cooled band of calendered foamed thermoplastic material to reduce bulk for storage.

2. Continuous process for thermoforming shapes on foamed thermoplastic material according to claim 1, characterized in that said step of continuously calendering said band of heated foamed thermoplastic material comprises, passing said band between the teeth of a first calender cylinder which are spaced with respect to the teeth of a second calender cylinder in a mutually alternating configuration.

3. Continuous process for thermoforming shapes on foamed thermoplastic material according to claim 1, characterized in that said step of continuously calendering said band of heated foamed thermoplastic material comprises passing said band between teeth arranged in pairs on a first calender cylinder, and teeth arranged in pairs on a second calender cylinder and offset by an angle of 180^{o} with respect to teeth provided on the first calender cylinder.

4. Continuous process for thermoforming shapes on foamed thermoplastic material according to claim 1, characterized in that said step of continuously calendering said band of heated foamed thermoplastic material comprises, passing said band between the teeth of a first calender cylinder and a second calender cylinder having a smooth surface.

5. Calender for continuously calendering a band of heated foamed thermoplastic material having a predetermined thickness, in the process as defined in claims 1-4, including a first calender cylinder, and a second calender cylinder located opposite said first calender cylinder, comprising a plurality of teeth provided on at least one of the calender cylinders, characterized in that said teeth have a height which is at least equal to the thickness of the band of heated foamed thermoplastic material to be calendered.

6. Calender for continuously calendering a band of heated foamed thermoplastic material according to claim 5, characterized in that said teeth are provided on both said first calender cylinder and on said second calender cylinder, the teeth of said first calender cylinder being spaced with respect to the teeth of said second calender cylinder in a mutually alternating configuration.

7. Calender for continuously calendering a band of heated foamed thermoplastic material according to claim 5, characterized in that said teeth are arranged in pairs on said first calender cylinder and on said second calender cylinder, the pairs of teeth on said second calender cylinder being offset by an angle of 180^{o} with respect to teeth provided on the first calender cylinder.

8. Calender for continuously calendering a band of heated foamed thermoplastic material according to claim 5, characterized in that said teeth are arranged on said first calender cylinder, and in that said second cylinder has a smooth surface.

## Patentansprüche

1. Kontinuierliches Verfahren zur Warmformung von geschäumtem thermoplastischem Material und von vernetztem und geschäumtem thermoplastischem Material in Folien oder Bändern, mit folgenden Schritten:
- Herstellen eines aus erhitztem und geschäumtem thermoplastischem Material bestehenden Bandes vorgegebener Dicke,
- fortgesetztes Kalandrieren des Bandes aus geschäumtem und thermoplastischem Material, indem das Band zwischen einem ersten Kalanderzylinder und einem zweiten Kalanderzylinder vorbeigeführt wird, von denen mindestens einer Zähne hat, deren Größe zumindest gleich ist der Dicke des zu kalandrierenden Bandes aus efhitztem und geschäumtem thermoplastischem Material,
- Abkühlen des kalandrierten Bandes aus geschäumtem thermoplastischem Material und
- Falten oder Rollen des abgekühlten Bandes aus kalandriertem, geschäumtem thermoplastischem Material zur Verringerung des für die Lagerung benötigten Raumbedarfs.

2. Kontinuierliches Verfahren zur Warmformung von geschäumtem thermoplastischem Material nach Anspruch 1, dadurch **gekennzeichnet**, daß in dem Verfahrensschritt des kontinuierlichen Kalandrierens des Bandes aus erhitztem und geschäumtem thermoplastischem Material das Band zwischen den Zähnen eines ersten Kalanderzylinders vorbeigeführt wird, die gegenüber den Zähnen eines zweiten Kalandenrzylinders in wechselseitig alternierender Anordnung beabstandet sind.

3. Kontinuierliches Verfahren zur Warmformung von geschäumtem thermoplastischem Material nach Anspruch 1, dadurch **gekennzeichnet**, daß in dem Verfahrensschritt des fortgesetzten Kalandrierens des Bandes aus erhitztem und geschäumtem thermoplastischem Material das Band zwischen paarweise an einem ersten Kalanderzylinder angeordneten Zähnen und paarweise einem zweiten Kalanderzylinder angeordneten und gegenüber den Zähnen an dem ersten Kalanderzylinder um einen Winkel von 180° versetzten Zähnen vorbeigeführt wird.

4. Kontinuierliches Verfahren zur Warmformung von geschäumtem thermoplastischem Material nach Anspruch 1, dadurch **gekennzeichnet**, daß in dem Verfahrensschritt des fortgesetzten Kalandrierens des Bandes aus erhitztem und geschäumtem thermoplastischem Material das Band zwischen den Zähnen eines ersten Kalanderzylinders und einem zweiten Kalanderzylinder mit einer weichen Oberfläche vorbeigeführt wird.

5. Kalander zum kontinuierlichen Kalandrieren eines aus erhitztem und geschäumtem thermoplastischem Material bestehenden Bandes vorgegebener Dicke in dem Verfahren nach Anspruch 1 - 4, mit einem ersten Kalanderzylinder und einem diesem gegenüberliegend angeordneten zweiten Kalanderzylinder, von denen mindestens einer mehrere Zähne hat, dadurch **gekennzeichnet**, daß die Größe der Zähne mindestens gleich ist der Dicke des zu kalandrierenden Bandes aus erhitztem und geschäumtem thermoplastischem Material.

6. Kalander zum kontinuierlichen Kalandrieren eines Bandes aus erhitztem und geschäumtem thermoplastischem Material nach Anspruch 5, dadurch **gekennzeichnet**, daß die Zähne sowohl an dem ersten Kalanderzylinder als auch an dem zweiten Kalanderzylinder vorgesehen sind und die Zähne des ersten Kalanderzylinders gegenüber den Zähnen des zweiten Kalanderzylinders in wechselseitig alternierender Anordnung beabstandet sind.

7. Kalander zum kontinuierlichen Kalandrieren eines Bandes aus erhitztem und geschäumtem thermoplastischem Material nach Anspruch 5, dadurch **gekennzeichnet**, daß die Zähne paarweise an dem ersten Kalanderzylinder und an dem zweiten Kalanderzylinder angeordnet sind und die Zahnpaare an dem zweiten Kalanderzylinder gegenüber den Zähnen an dem ersten Kalandenylinder um einen Winkel von 180° versetzt sind.

8. Kalander zum kontinuierlichen Kalandrieren eines Bandes aus erhitztem und geschäumtem thermoplastischem Material nach Anspruch 5, dadurch **gekennzeichnet**, daß die Zähne an dem ersten Kalanderzylinder angeordnet sind und der zweite Zylinder eine glatte Oberfläche hat.

## Revendications

1. Procédé continu pour le thermoformage de formes sur une matière thermoplastique expansée et en matière thermoplastique expansée réticulée en feuilles ou en bandes, comprenant les étapes de :
- produire une bande de matière thermoplastique expansée chauffée à une épaisseur prédéterminée ;
- laminer de façon continue ladite bande de matière thermoplastique expansée chauffée en passant ladite bande entre un premier vérin de laminoir et un second vérin de laminoir, dont au moins un est muni de dents ayant une hauteur qui est au moins égale à l'épaisseur de ladite bande de matière thermoplastique expansée chauffée à laminer ;
- refroidir la bande laminée de matière thermoplastique expansée ; et
- plier ou rouler la bande refroidie de matière thermoplastique expansée laminée pour réduire le volume pour le stockage.

2. Procédé continu pour le thermoformage de formes sur une matière thermoplastique expansée selon la revendication 1,
caractérisé en ce que ladite étape de laminage en continu de ladite bande de matière thermoplastique expansée chauffée comprend le passage de ladite bande entre les dents d'un premier vérin de laminoir, qui sont espacées par rapport aux dents d'un second vérin de laminoir dans une configuration mutuellement alternée.

3. Procédé continu pour le thermoformage de formes sur une matière thermoplastique expansée selon la revendication 1,
caractérisé en ce que ladite étape de laminage en continu de ladite bande de matière thermoplastique expansée chauffée comprend le passage de ladite bande entre des dents agencées par paires sur un premier vérin de laminoir, et des dents agencées par paires sur un second vérin de laminoir et décalées d'un angle de 180° par rapport aux dents prévues sur le premier vérin de laminoir,

4. Procédé continu pour le thermoformage de formes sur une matière thermoplastique expansée selon la revendication 1,
caractérisé en ce que ladite étape de laminage en continu de ladite bande de matière thermoplastique expansée chauffée comprend le passage de ladite bande entre les dents d'un premier vérin de laminoir et un second vérin de laminoir ayant une surface lisse.

5. Laminoir pour laminer de façon continue une bande de matière thermoplastique expansée chauffée ayant une épaisseur prédéterminée selon le procédé comme défini dans les revendications 1-4, incluant un premier vérin de laminoir et un second vérin de laminoir situé à l'opposé dudit premier vérin de laminoir, comprenant une pluralité de dents prévues sur au moins un des vérins de laminoir,
caractérisé en ce que lesdites dents présentent une hauteur qui est au moins égale à l'épaisseur de la bande de matière thermoplastique expansée chauffée à laminer.

6. Laminoir pour laminer de façon continue une bande de matière thermoplastique expansée chauffée selon la revendication 5,
caractérisé en ce que lesdites dents sont prévues à la fois sur ledit premier vérin de laminoir et sur ledit second vérin de laminoir, les dents dudit premier vérin de laminoir étant espacées par rapport aux dents dudit second vérin de laminoir dans une configuration mutuellement alternée.

7. Laminoir pour laminer de façon continue une bande de matière thermoplastique expansée chauffée selon la revendication 5,
caractérisé en ce que lesdites dents sont agencées par paires sur ledit premier vérin de laminoir et sur ledit second vérin de laminoir, les paires de dents sur ledit second vérin de laminoir étant décalées d'un angle de 180° par rapport aux dents prévues sur le premier vérin de laminoir.

8. Laminoir pour laminer de façon continue une bande de matière thermoplastique expansée chauffée selon la revendication 5,
caractérisé en ce que lesdites dents sont agencées sur ledit premier vérin de laminoir, et en ce que ledit second vérin présente une surface lisse.
